# EUROPÄISCHE PATENTANMELDUNG

(11) **EP 1 884 408 A1**
(43) Veröffentlichungstag der Anmeldung: **06.02.2008**
(21) Anmeldenummer: 07014751.7
(22) Anmeldetag: 27.07.2007
(51) Int. Cl.: B60Q 3/02, B60Q 3/04

(54) **Kraftfahrzeug**

(30) Priorität: 02.08.2006 DE 102006036060
(71) Anmelder: AUDI AG, 85045 Ingolstadt (DE)
(72) Erfinder: Berlitz, Stephan, 86529 Schrobenhausen (DE); Schmitz, Christoph, 93326 Abensberg (DE)
(74) Vertreter: Thielmann, Frank

(57) **Zusammenfassung**

Kraftfahrzeug umfassend mehrere im Innenraum verteilt angeordnete Beleuchtungseinrichtungen, über die verschiedene Bereiche oder Gegenstände des Fahrzeuginnenraums insbesondere als Innenraum- oder Ambientenbeleuchtung aus- oder beleuchtbar sind, wobei ein zumindest einen Teil der Beleuchtungseinrichtungen (3, 4, 5, 6, 7, 8, 9, 10, 11) steuerndes Steuergerät (2) vorgesehen ist, in dem verschiedene der Ansteuerung der separat ansteuerbaren Beleuchtungseinrichtungen (3, 4, 5, 6, 7, 8, 9, 10, 11) dienende Steuerprogramme abgelegt sind, wobei das jeweils zu verwendende Steuerprogramm in Abhängigkeit eines oder mehrerer den Fahrzeugzustand und/oder den Fahrbetrieb beschreibender, über Sensoren (12, 13, 14, 15, 16, 17, 18) erfasster Informationssignale wählbar ist.

## Beschreibung

Die Erfindung betrifft ein Kraftfahrzeug, umfassend mehrere im Innenraum verteilt angeordnete Beleuchtungseinrichtungen, über die verschiedene Bereiche oder Gegenstände des Fahrzeuginnenraums insbesondere als Innenraum- oder Ambientenbeleuchtung aus- oder beleuchtbar sind.

Im Innenraum eines Kraftfahrzeugs sind eine Vielzahl verschiedener Beleuchtungseinrichtungen verteilt angeordnet, die zur Beleuchtung unterschiedlichster Bereiche oder Gegenstände dienen. Zu nennen ist hier beispielsweise die übliche Innenraumbeleuchtung mit üblicherweise einer oder mehreren Beleuchtungseinrichtungen im Bereich des Dachhimmels, ferner einer Ambientenbeleuchtung, die verschiedene vorzugsweise bodennah oder im Bereich der Seitentüren angeordnete Beleuchtungseinrichtungen umfasst, weiterhin beispielsweise Einstiegsleuchten, wie aber auch Beleuchtungseinrichtungen, die zum Hervorheben bestimmter Gegenstände, wie beispielsweise verschiedener Anzeigen oder Armaturen im Cockpit oder am Armaturenbrett oder verschiedener Bedienelemente, die sonst wo im Fahrzeug verteilt sein können, dienen.

Der Betrieb der verschiedenen Beleuchtungseinrichtungen wird über unterschiedliche Steuergeräte gesteuert. Wird beispielsweise die Tür geöffnet, so schaltet ein Steuergerät sämtliche der Innenraumbeleuchtung oder ggf., sofern vorgesehen, der Ambientenbeleuchtung dienende Beleuchtungseinrichtungen unmittelbar zu, wobei die Beleuchtungseinrichtungen entweder sofort zu 100% betrieben werden oder über eine Rampe erst langsam in der Beleuchtung hochgeregelt werden. Entsprechend werden die Beleuchtungseinrichtungen beim Türschließen wieder ausgeschaltet. Die Cockpit- oder Ambientenbeleuchtung ist überhaupt keiner steuergeräteseitig vorgenommenen Variation zugänglich. Wird beispielsweise aufgrund der Umgebungshelligkeit das Abblendlicht zugeschaltet, so werden automatisch auch alle cockpitoder armaturenbrettseitigen Beleuchtungseinrichtungen, die zum Erhellen unterschiedlichster Gegenstände oder Bereiche dienen, zugeschaltet. Es sind also unterschiedliche Steuergeräte im Einsatz, eine Möglichkeit zur Variation des Beleuchtungsverhaltens im Kraftfahrzeug ist nicht gegeben.

Der Erfindung liegt damit das Problem zugrunde, ein Kraftfahrzeug anzugeben, das je nach Situation eine Variation der Beleuchtung zulässt.

Zur Lösung dieses Problems ist bei einem Kraftfahrzeug der eingangsgenannten Art erfindungsgemäß vorgesehen, dass ein zumindest einen Teil der Beleuchtungseinrichtung steuerndes Steuergerät vorgesehen ist, in dem verschiedene der Ansteuerung der separat ansteuerbaren Beleuchtungseinrichtungen dienende Steuerprogramme abgelegt sind, wobei das jeweils zu verwendende Steuerprogramm in Abhängigkeit eines oder mehrerer den Fahrzeugzustand und/oder den Fahrbetrieb beschreibender, über Sensoren erfasste Informationssignale wählbar ist.

Erfindungsgemäß ist ein einziges Steuergerät vorgesehen, das mit wenigstens einem Teil, vorzugsweise allen Beleuchtungseinrichtungen, die im Innenraum des Kraftfahrzeugs verbaut sind, kommuniziert und diese ansteuern kann. Im Steuergerät selbst ist eine Schar unterschiedlicher situationsabhängiger Steuerprogramme abgelegt, die die Ansteuerung sämtlicher mit dem Steuergerät kommunizierender Beleuchtungseinrichtungen definieren. Die Steuerprogramme beschreiben unterschiedlichste Beleuchtungsszenarien, wobei das jeweils zu wählende Steuerprogramm in Abhängigkeit entsprechender, den Fahrzeugzustand oder den Fahrbetrieb beschreibender Sensorsignale ausgewählt werden. Beim erfindungsgemäßen Kraftfahrzeug wird also kontinuierlich eine konkrete Fahrsituation oder ein konkreter Fahrzeugzustand über die Sensorik erfasst, wobei das Steuergerät mit sämtlichen hierin eingebundenen Sensoren kommuniziert. Dies geschieht, wie auch die Kommunikation mit den einzelnen Beleuchtungseinrichtungen, in bekannter Weise über einen Fahrzeugbus, üblicherweise den CAN-Bus.

Je nachdem, wie nun die über die sensorseitig gegebenen Informationssignale beschriebene Situation ist, wählt nun das Steuergerät das geeignete Steuerprogramm aus, das ein bestimmtes Beleuchtungsszenario, mithin also eine situationsabhängige, signalbezogene Beleuchtungssteuerung beschreibt. Diese unterschiedlichen Beleuchtungsszenarien oder Beleuchtungsvorgaben können in beliebiger Weise programmtechnisch erfasst und in dem Steuergerät abgelegt sein, wobei eine beliebige Anzahl an Steuerprogrammen hinterlegt werden kann. Über diese Steuerprogramme kann definiert werden, welche Beleuchtungseinrichtungen in Abhängigkeit der gegebenen Informationssignale überhaupt angesteuert werden sollen, wie der zeitliche Ein- und Ausschaltbetrieb ist, mit welcher Helligkeit die einzelnen Beleuchtungseinrichtungen angesteuert werden, ob diese über eine Zeitrampe oder schlagartig angesteuert werden sollen, ob, wenn farbliche Leuchten verbaut sind, diese zugeschaltet werden sollen, oder ob, wenn beispielsweise Rot-Grün-Blau LEDs als Lichtquellen verbaut sind, ein Farbwechsel erfolgen soll bzw. welche Farbe überhaupt erzeugt werden soll. Die Variationsvielfalt ist beliebig, es können die unterschiedlichsten Veränderungen programmtechnisch erfasst sein und einzelnen Informationssignalen oder Informationssignalkombinationen zugeordnet sein.

Wie bereits beschrieben, können die über das Steuergerät ansteuerbaren Beleuchtungseinrichtungen sehr wohl der reinen Ausleuchtung des Innenraums dienende Beleuchtungseinrichtungen als auch der Ausleuchtung von Anzeigen, Armaturen und/oder Bedienelementen dienende Beleuchtungseinrichtung umfassen, mithin also alle Beleuchtungseinrichtungen, die im Innenraum des Fahrzeugs der Lichtabgabe dienen.

Als Sensoren, deren Informationssignale in irgendeiner Weise der Steuerprogrammwahl zugrunde gelegt werden können, sind Türsensoren zu nennen, über die das Öffnen und Schließen einer Tür erfassbar ist, wobei beim Öffnen über die Steuerungseinrichtung definierte Beleuchtungseinrichtungen in einer vorbestimmten Reihenfolge und ggf. in einer vorbestimmten Geschwindigkeit, und/oder in einer definierten Helligkeit und/oder Farbe einschaltbar und beim Türschließen in entsprechender Weise ausschaltbar sind.

Wird also beispielsweise die Fahrertür geöffnet, so breitet sich beispielsweise das Licht der Innenraumbeleuchtung begonnen vom fahrerseitigen Fußraum über den beifahrerseitigen Fußraum in den Rückraum des Fahrzeugs aus. Es wird also eine definierte Beleuchtung der Einstiegssituation vorgenommen. Auch kann hier abgelegt sein, in welcher Weise die Zuschaltung erfolgt, ob also beispielsweise mit 100% Helligkeit oder durch entsprechende rampenförmige Helligkeitserhöhung (Dimmen) oder in welcher Weise die Beleuchtungseinrichtungen leuchten sollen, wenn verschiedene Farbmöglichkeiten zur Wahl stehen. In entsprechender Weise erfolgt der am Ausschaltvorgang beim Türschließen, auch hier kann die Innenraumbeleuchtung in vorgegebener Reihenfolge etc. ausgeschaltet werden.

Eine weitere Abhängigkeit des Beleuchtungsbetriebs bzw. der Beleuchtungsvariation kann bei Verwendung eines Geschwindigkeitssensors vorgenommen werden, wobei in Abhängigkeit der ermittelten Geschwindigkeit des Fahrzeugs über die Steuerungseinrichtung definierte Beleuchtungseinrichtungen in einer bestimmten Reihenfolge zu- oder abschaltbar sind und/oder in ihrer Helligkeit oder in ihrer Farbe variierbar sind. Über die Ist-Geschwindigkeit, die über einen geeigneten Sensor bzw. eine entsprechende Sensorik erfasst werden kann, kann beispielsweise abgeschätzt werden, ob das Fahrzeug in der Stadt fährt oder Überland oder auf einer Autobahn fährt. In Abhängigkeit davon kann dann das entsprechende Beleuchtungsprogramm zur Steuerung des entsprechenden, der Ist-Situation, erfasst über die Geschwindigkeit, zugeordneten Beleuchtungsszenarios gewählt werden. Beispielsweise besteht die Möglichkeit, bei einer Stadtfahrt bei Dunkelheit die Innenbeleuchtung etwas zurückzunehmen, da üblicherweise in der Stadt die Umgebungshelligkeit größer ist, und die Innenbeleuchtung, beispielsweise die der Bedienelemente oder Armaturen, bei Überlandfahrt wieder etwas stärker anzulegen.

Weiterhin kann erfindungsgemäß als Sensor ein Helligkeitssensor dienen, wobei in Abhängigkeit der ermittelten Umgebungshelligkeit über die Steuerungseinrichtung definierte Beleuchtungseinrichtungen in einer vorbestimmten Reihenfolge zu- oder abschaltbar sind und/oder in ihrer Helligkeit und/oder ihrer Farbe variierbar sind. Das heißt, eine helligkeitsabhängige Programmwahl kann über das Informationssignal eines solchen Helligkeitssensors, der häufig ohnehin im Fahrzeug zur Steuerung des automatischen Zu- oder Abschaltbetriebs des Abblendlichts vorgesehen ist, gewählt bzw. definiert werden.

Schließlich besteht die Möglichkeit, als Sensor einen die Innen- oder die Außentemperatur messenden Sensor zu verwenden, wobei in Abhängigkeit der ermittelten Umgebungstemperatur über die Steuerungseinrichtung definierte Beleuchtungseinrichtungen in einer vorbestimmten Reihenfolge zu- oder abschaltbar sind und/oder in ihrer Helligkeit und/oder ihrer Farbe variierbar sind. Diese Variationsmöglichkeit ist insbesondere in Verbindung mit farbigen Beleuchtungseinrichtungen zweckmäßig, beispielsweise bei Verwendung von Rot-Grün-Blau LEDs, die im sichtbaren Lichtspektrum alle Farben erzeugen können. Ist die Außentemperatur hoch, ist es also sehr heiß, kann die Innenraum- oder Ambientenbeleuchtung beispielsweise Blau angesteuert werden, da Blau eine kühle Farbe ist und mithin als kühl vom Fahrer oder sonstigen im Fahrzeug befindlichen Personen empfunden wird. In entsprechend umgekehrter Weise kann bei kalter Umgebungstemperatur die Innenraum- oder Ambientenbeleuchtung Rot angesteuert werden, da Rot als relativ warme Farbe empfunden wird.

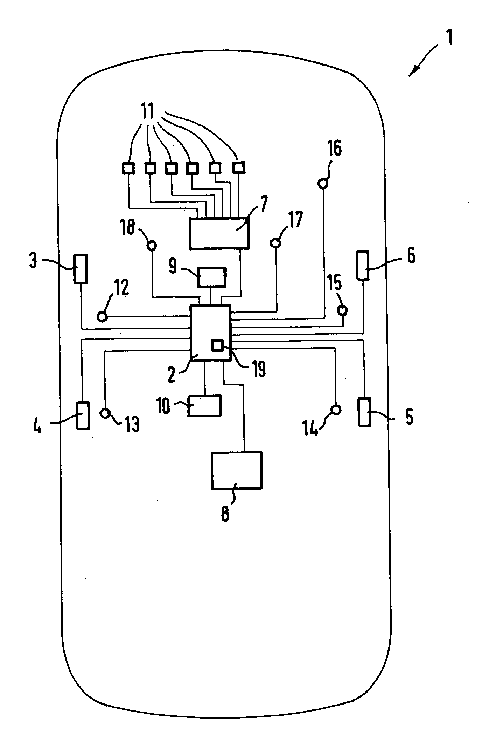

Die Figur zeigt ein Prinzipbeispiel eines erfindungsgemäßen Kraftfahrzeugs 1. Dieses umfasst eine zentrale Steuerungseinrichtung 2, mit der eine Vielzahl unterschiedlicher Beleuchtungseinrichtungen kommunizieren. Gezeigt sind vier Beleuchtungseinrichtungen 3, 4, 5, 6, die jeweils einer Tür des Fahrzeugs zugeordnet sind und der Einstiegsbeleuchtung dienen. Vorgesehen ist ferner eine Beleuchtungseinrichtung 7 oberhalb der beiden Vordersitze, die der Innenraumbeleuchtung dient, wie auch eine Beleuchtungseinrichtung 8 im Fond zur Beleuchtung der Rücksitze. Beide Beleuchtungseinrichtungen 7, 8 sind üblicherweise im Dachhimmel integriert. Vorgesehen ist ferner eine zwischen Fahrer- und Beifahrersitz angeordnete Beleuchtungseinrichtung 9, die der Beleuchtung der Mittelkonsole dient, wie auch eine entsprechende Beleuchtung 10 im Rückraum am hinteren Ende der Mittelkonsole vorgesehen ist. Weiterhin sind exemplarisch eine Vielzahl von Beleuchtungseinrichtungen 11 dargestellt, die im Cockpit oder am Armaturenbrett vorgesehen sind und der Instrumenten- oder Bedienelementbeleuchtung etc. dienen. An dieser Stelle ist darauf hinzuweisen, dass Fig. 1 lediglich eine Prinzipdarstellung ist. Selbstverständlich können unterschiedlichste und eine beliebige Vielzahl verschiedener Beleuchtungseinrichtungen in das System eingebunden werden. All die gezeigten Beleuchtungseinrichtungen kommunizieren mit dem zentralen Steuergerät 2, das den Betrieb sämtlicher Beleuchtungseinrichtungen steuert.

Weiterhin kommuniziert das Steuergerät 2 mit verschiedenen Sensoren. Gezeigt sind vier Sensoren 12, 13, 14, 15, die den jeweiligen Seitentüren zugeordnet sind und erfassen, ob die Seitentür geöffnet oder geschlossen wird. Vorgesehen ist ferner ein Geschwindigkeitssensor 16, über den die Ist-Geschwindigkeit des Fahrzeugs erfasst werden kann, ferner ein Temperatursensor 17, bei dem es sich um einen die Innentemperatur oder die Außentemperatur messenden Sensor handeln kann (es können auch zwei Sensoren vorgesehen sein), und ein Helligkeitssensor 18, der die Umgebungshelligkeit misst. Auch all diese Sensoren, von denen noch weitere vorgesehen oder eingebunden sein können, kommunizieren mit dem Steuergerät 2.

Im Steuergerät 2 ist ferner ein Speicherbereich 19 vorgesehen, in dem eine Vielzahl unterschiedlicher Steuerprogramme abgelegt sind, wobei die Auswahl des jeweiligen Steuerprogramms, über das einige oder alle der beschriebenen Beleuchtungseinrichtungen in ihrem Betrieb gesteuert werden, in Abhängigkeit des Informationssignals eines oder mehrerer Sensoren seitens des Steuergeräts 2 erfolgt.

Wird beispielsweise über den an der Fahrertür befindlichen Sensor 12 erfasst, dass die Seitentür geöffnet wird, so wird beispielsweise über das Steuergerät 2 zunächst die Beleuchtungseinrichtung 3 angesteuert. Anschließend beispielsweise die Beleuchtungseinrichtungen 7 und 9 oberhalb der beiden Fahrersitze, danach die Beleuchtungseinrichtung 6, wonach die im Fond befindlichen Beleuchtungseinrichtungen 13, 10, 8 und 5 angesteuert und eingeschaltet werden. Dabei besteht die Möglichkeit, je nach Auslegung des gewählten Steuerprogramms, die einzelnen Beleuchtungseinrichtungen 7 der zeitlich aufeinander folgenden Ansteuerung auch in der Helligkeit entweder unterschiedlich anzusteuern oder über eine Rampensteuerung langsam aufzudimmen. Auch ist es denkbar, sollte es sich um farbige Beleuchtungseinrichtungen handeln, die also farbige Lichtquellen aufweisen (z.B. eine Rot-Grün-Blau-LED), die Farbe über das Steuerprogramm entsprechend einzustellen.

Wird beispielsweise den Temperatursensor 17 erfasst, dass die Außentemperatur sehr hoch ist, oder dass auch die Innentemperatur sehr hoch ist, so können beispielsweise die seitentürseitigen Beleuchtungseinrichtungen 3, 4, 5 und 6, sofern diese über in ihrer Farbe variierbare Beleuchtungsmittel verfügen, so angesteuert werden, dass diese blaues Licht emittieren, da Blau eine kühle, vom Fahrer angenehm empfundene Farbe ist. In entsprechender Weise könnten auch beispielsweise die Beleuchtungseinrichtungen 11, so diese in der Farbe verändert werden können, Blau angesteuert werden, so dass beispielsweise die Anzeigen oder Armaturen in Blau leuchten. In umgekehrter Weise könnten diese Beleuchtungseinrichtungen Rot angesteuert werden, wenn es von der Umgebungstemperatur her sehr kalt ist.

Über den Geschwindigkeitssensor kann die Ist-Geschwindigkeit erfasst werden und daraus abgeleitet werden, ob sich das Fahrzeug beispielsweise in der Stadt oder Überland oder auf Autobahnen bewegt. In Abhängigkeit von der Geschwindigkeit kann ebenfalls ein programmtechnisch definiertes auswählbares Beleuchtungsszenario abgearbeitet werden, beispielsweise kann die Helligkeit oder die Zahl oder die Art der angesteuerten Beleuchtungseinrichtungen variiert werden, wenn die Geschwindigkeit erhöht wird, wenn also klar ist, dass das Fahrzeug auf einer Autobahn fährt, etc. Dies kann auch in Verbindung mit dem Signal des Helligkeitssensors erfolgen, der die Umgebungshelligkeit erfasst. Je nachdem, wie hell es in der Umgebung ist, kann die Helligkeit verschiedener Beleuchtungseinrichtungen variiert werden, um einen optimalen Erkennungseffekt zu bieten. Auch können durch die Variation der Beleuchtungseinrichtungen Blendeffekte oder dergleichen des Fahrers vermieden werden.

Insgesamt kann also durch die erfindungsgemäße Ausgestaltung des Kraftfahrzeugs mit nur einem zentralen Steuergerät und der Vielzahl der hinterlegten signalsspezifischen Steuerprogramme eine optimale Beleuchtung gewährleistet werden, nachdem unterschiedlichste Beleuchtungsszenarien realisierbar sind. Auch besteht die Möglichkeit, ohne weiteres das Steuergerät um verschiedene Steuerprogramme zu erweitern, sofern neue Beleuchtungsszenarien entwickelt werden oder sich aus sicherheitstechnischen oder komforttechnischen Erwägungen ein oder mehrere neue Steuerungsprogramme als besonders zweckmäßig erwiesen haben. Das System ist also in sich nicht geschlossen, sondern jederzeit veränderbar bzw. erweiterbar.

## Patentansprüche

1. Kraftfahrzeug umfassend mehrere im Innenraum verteilt angeordnete Beleuchtungseinrichtungen, über die verschiedene Bereiche oder Gegenstände des Fahrzeuginnenraums insbesondere als Innenraum- oder Ambientenbeleuchtung aus- oder beleuchtbar sind,
**dadurch gekennzeichnet,**
**dass** ein zumindest einen Teil der Beleuchtungseinrichtungen (3, 4, 5, 6, 7, 8, 9, 10, 11) steuerndes Steuergerät (2) vorgesehen ist, in dem verschiedene der Ansteuerung der separat ansteuerbaren Beleuchtungseinrichtungen (3, 4, 5, 6, 7, 8, 9, 10, 11) dienende Steuerprogramme abgelegt sind, wobei das jeweils zu verwendende Steuerprogramm in Abhängigkeit eines oder mehrerer den Fahrzeugzustand und/oder den Fahrbetrieb beschreibender, über Sensoren (12, 13, 14, 15, 16, 17, 18) erfasster Informationssignale wählbar ist.

2. Kraftfahrzeug nach Anspruch 1,
**dadurch gekennzeichnet,**
**dass** die über das Steuergerät (2) ansteuerbaren Beleuchtungseinrichtungen (3, 4, 5, 6, 7, 8, 9, 10, 11) sowohl der reinen Ausleuchtung des Innenraums dienende Beleuchtungseinrichtungen als auch der Beleuchtung von Anzeigen, Armaturen und/oder Bedienelementen dienende Beleuchtungseinrichtungen umfassen.

3. Kraftfahrzeug nach Anspruch 1 oder 2,
**dadurch gekennzeichnet,**
**dass** als Sensoren (12, 13, 14, 15) Türsensoren dienen, über die das Öffnen und Schließen einer Tür erfassbar ist, wobei beim Türöffnen über das Steuergerät definierte Beleuchtungseinrichtungen (3, 4, 5, 6, 7, 8, 9, 10, 11) in einer vorbestimmten Reihenfolge und gegebenenfalls in einer vorbestimmten Geschwindigkeit, und/oder in einer definierten Helligkeit und/oder Farbe einschaltbar und beim Türschließen in entsprechender Weise ausschaltbar sind.

4. Kraftfahrzeug nach einem der vorangehenden Ansprüche,
**dadurch gekennzeichnet,**
**dass** als Sensor (16) ein Geschwindigkeitssensor dient, wobei in Abhängigkeit der ermittelten Geschwindigkeit über das Steuergerät definierte Beleuchtungseinrichtungen (3, 4, 5, 6, 7, 8, 9, 10, 11) in einer vorbestimmten Reihenfolge zu- oder abschaltbar sind und/oder in ihrer Helligkeit und/oder in ihrer Farbe variierbar sind.

5. Kraftfahrzeug nach einem der vorangehenden Ansprüche,
**dadurch gekennzeichnet,**
**dass** als Sensor (18) ein Helligkeitssensor dient, wobei in Abhängigkeit der ermittelten Umgebungshelligkeit über das Steuergerät definierte Beleuchtungseinrichtungen (3, 4, 5, 6, 7, 8, 9, 10, 11) in einer vorbestimmten Reihenfolge zu- oder abschaltbar sind und/oder in ihrer Helligkeit und/oder ihrer Farbe variierbar sind.

6. Kraftfahrzeug nach einem der vorangehenden Ansprüche,
**dadurch gekennzeichnet,**
**dass** als Sensor (17) ein die Innen- oder die Außentemperatur messender Sensor dient, wobei in Abhängigkeit der ermittelten Umgebungstemperatur über das Steuergerät definierte Beleuchtungseinrichtungen (3, 4, 5, 6, 7, 8, 9, 10, 11) in einer vorbestimmten Reihenfolge zu- oder abschaltbar sind und/oder in ihrer Helligkeit und/oder ihrer Farbe variierbar sind.
